# EUROPEAN PATENT APPLICATION

(11) **EP 2 916 598 A1**
(43) Date of publication of application: **09.09.2015**
(21) Application number: 13852037.4
(22) Date of filing: 29.08.2013
(51) Int. Cl.: H04W 52/40, H04W 52/30, H04W 72/04

(54) **USER TERMINAL, WIRELESS COMMUNICATION SYSTEM, AND WIRELESS COMMUNICATION METHOD**

(30) Priority: 02.11.2012 JP 2012242406
(71) Applicant: NTT DOCOMO, INC., Chiyoda-ku Tokyo 100-6150 (JP)
(72) Inventor: KAKISHIMA, Yuichi, Tokyo 100-6150 (JP); TAKEDA, Kazuaki, Tokyo 100-6150 (JP); KISHIYAMA, Yoshihisa, Tokyo 100-6150 (JP)
(74) Representative: Hoffmann Eitle
(86) International application number: PCT/JP2013/073161
(87) International publication number: WO 2014/069085

(57) **Abstract**

In order to apply power scaling in a signal overlapping period where uplink transmission power exceeds an upper limit, while minimizing deterioration of uplink transmission quality, the present invention provides a user terminal that is capable of communicating with a plurality of radio base stations via a plurality of component carriers in a radio communication system using a system band configurable with the plurality of component carriers, the user terminal having: a transmitting section (106) that transmits an uplink physical channel at an uplink transmission timing, the plurality of component carriers being grouped into a plurality of timing groups, and the transmission timing being controlled per timing group; and a power control section (1084) that, when the uplink transmission timing is controlled per timing group, performs power scaling preferentially on physical channels in a full overlapping period in which the physical channels are of same subframe number and overlap each other across component carriers.

## Description

### TECHNICAL FIELD

The present invention relates to a user terminal, a radio communication system and a radio communication method for performing multi-carrier transmission to a plurality of connection cells on uplink at different timings.

### BACKGROUND ART

In UMTS (Universal Mobile Telecommunications System), for the purposes of further increasing spectrum efficiency and peak data rates and providing low delay and so on, long-term evolution (LTE) has been under study (see Non-Patent Literature 1). As a result of the study, in Release-8 LTE (hereinafter referred to as "Rel.-8 LTE"), as multi access schemes, an OFDMA (Orthogonal Frequency Division Multiple Access) -based system is adopted for the downlink and an SC-FDMA (Single Carrier Frequency Division Multiple Access)-based system is adopted for the uplink. In Rel.-8 LTE, it is possible to achieve a transmission rate of maximum 300 Mbps on the downlink and 75 Mbps on the uplink by using a variable band which ranges from 1.4 MHz to 20 MHz. At present, in 3GPP, for the purpose of achieving further broadbandization and higher speed in the UMTS network, successor systems to LTE have been under study (for example, LTE Advanced (LTE-A)).

In these days, it has been considered that a heterogeneous network (HetNet) is configured in which a low power node (LPN) of low transmission power overlays in an area of a macro cell and carrier aggregation (CA) is applied to the HetNet thereby to achieve an increase in network capacity. Carrier aggregation is a broadbandization technique by using a plurality of component carriers (CCs) simultaneously, each component carrier being a system band (1.4 MH to 20 MHz) supported by LTE. In HetNet, a user terminal changes connection cells to which the user terminal connects per CC thereby to realize effective control of the user terminal, traffic offloading and the like.

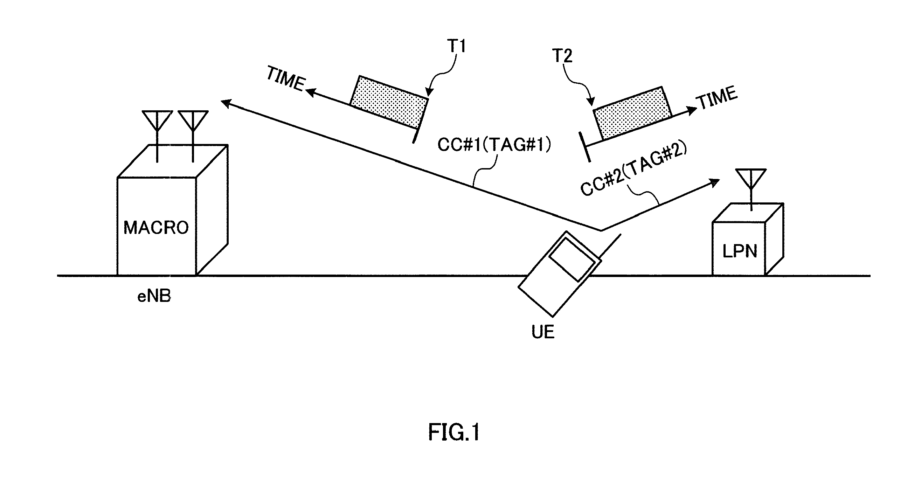

Fig. 1 illustrates the HetNet in which a user terminal UE is connected to two cells, a base station apparatus eNB (macro cell) and a low power node LPN (low power cell). The user terminal UE is assigned with component carriers CC #1 and CC #2 by carrier aggregation, by which the user terminal is connected to the macro cell via the component carrier CC #1 and is also connected to the low power cell via the component carrier CC #2. Since the cell of the low power node LPN is small, the user terminal UE is positioned closer to the low power node LPN than to the base station apparatus eNB.

In the recent standards of the LTE-A, Rel. 11-LTE, for the purpose of synchronizing reception timings at the respective nodes (base station apparatus and low power node), MTA (Multiple Timing Advance) function has been introduced for realizing a plurality of transmission timings for a plurality of CCs on uplink (see, for example, Non-Patent Literature 2). Here, in the versions up to Rel. 10-LTE, the user terminal UE is controlled to have a single transmission timing (called TA or Single TA). In the example illustrated in Fig. 1, the macro cell performs uplink transmission at the transmission timing T1 and the low power cell performs uplink transmission at the transmission timing T2 that is delayed by a predetermined time.

In LTE-A, carrier aggregation is implemented using maximum five CCs. In MTA introduced in Rel. 11-LTE, maximum five CCs are grouped into maximum four TAGs (TA Groups) and transmission timing is controlled per TAG.

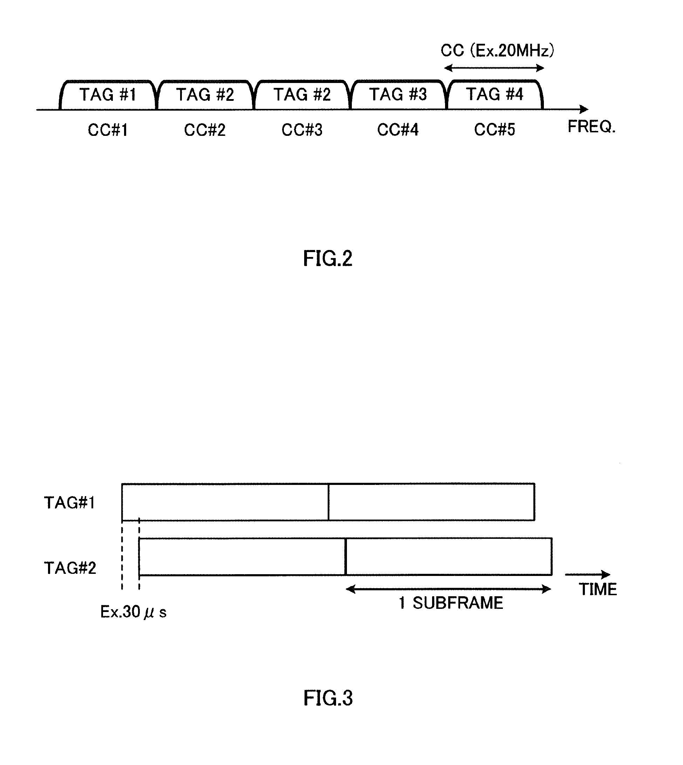

Fig. 2 illustrates five CCs that are grouped into four TAGs. In Fig. 2, CC #1 to CC #5 are grouped into four TAGs #1 to #4. Specifically, CC #1 is assigned with TAG #1, two CCs #2 and #3 are assigned with TAG #2, CC #4 is assigned with TAG #3, and CC #5 is assigned with TAG #4.

In the user terminal UE to which MTA is applied, when controlling an uplink transmission timing per TAG, as illustrated in Fig. 3, a transmission timing difference between TAGs is 30 µs at the maximum. In Fig. 3, for example, transmission timings of TAG #1 and TAG #2 are described as being shifted by 30 µs. In Fig. 3, the vertical axis denotes the frequency (CC) and the horizontal axis denotes the time.

### CITATION LIST

### NON-PATENT LITERATURE

Non-Patent Literature 1: GPP, TR25.912 (V7.1.0), "Feasibility study for Evolved URA and UTRAN", Sept. 2006
Non-Patent Literature 2:3GPP, TS 36.211 Sec. 8.1, "Timing Advance"

### SUMMARY OF THE INVENTION

### TECHNICAL PROBLEM

Here, on the uplink in the LTE-A system, transmission power is controlled per CC or per subframe and control is made such that total transmission power of each subframe does not exceed an upper limit. When applying MTA introduced in Rel. 11-LTE to the user terminal UE, there may occur a period in which uplink physical channel signals overlap each other between TAGs (hereinafter referred to as "signal overlapping period"), and in this signal overlapping period, transmission power may exceed a predetermined upper limit.

As the signal overlapping period that may occur when MTA is applied to the user terminal UE, there are expected a period in which physical channels (signals) of same subframe number overlap across component carriers (CCs) (Full Overlap (FO) period), a period in which physical channels (signals) of different subframe numbers partially overlap each other across component carriers (CCs) (Partial Overlap (PO) period) and a period in which physical channels (signals) overlap each other in the same TAG (Same TAG Overlap (SO) period).

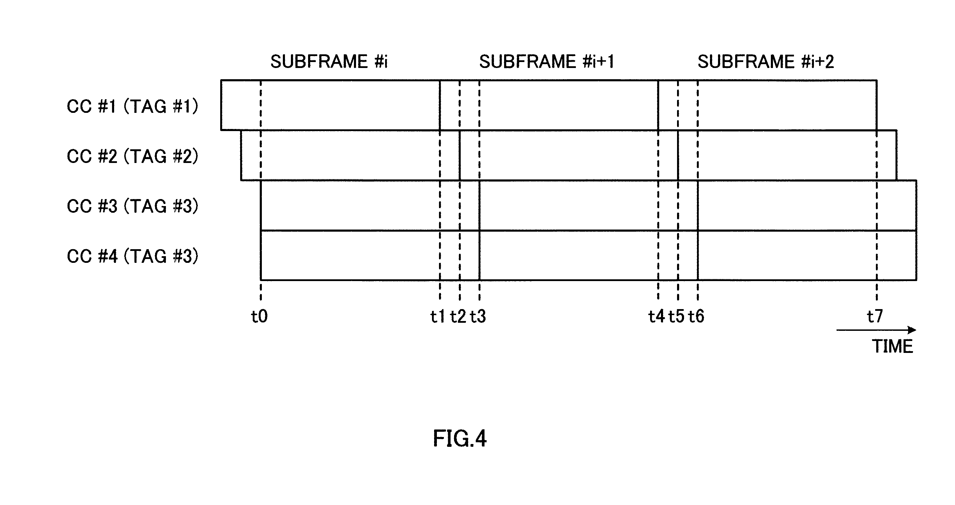

Fig. 4 illustrates an example of signal overlapping periods expected when MTA is applied to the user terminal. In Fig. 4, four CCs #1 to #4 are grouped into three TAGs #1 to #3. Specifically, CC #1 is assigned with TAG #1, CC #2 is assigned with TAG #2, two CCs #3 and #4 are assigned with one TAG #3. In Fig. 4, the vertical axis denotes the frequency (CC) and the horizontal axis denotes the time.

In the specific example illustrated in Fig. 4, FO occurs over CC #1 to CC #4, between the time t0 and the time t1, between the time t3 and the time t4 and between the time t6 and the time t7. In addition, between the time t1 and the time t2 and between the time t4 and the time t5, PO occurs over CC #1 and CC #2, FO occurs over CC #2 to CC #4 and SO occurs over CC #3 and CC #4. Further, between the time t2 and the time t3 and between the time t5 and the time 6, FO occurs over CC #1 and CC #2, PO occurs CC #2 to CC #4 and SO occurs over CC #3 and CC #4.

Thus, in the occurring signal overlapping periods (FO period, PO period and SO period), the user terminal is required to perform power adjustment (more specifically, power scaling) so as not to exceed an upper limit of transmission power specified per CC and an upper limit of total transmission power for all the CCs. In the present description, power scaling used here includes not only mere reduction in transmission power but also reduction of transmission power to zero.

However, when power scaling is applied to these signal overlapping periods (FO period, PO period and SO period), there causes reduction in signal power of a physical channel transmitted during this signal overlapping period, which causes a problem of deterioration in uplink transmission quality.

The present invention was carried out in view of the foregoing and aims to provide a user terminal, a radio communication system and a radio communication method capable of applying power scaling in a signal overlapping period in which uplink transmission power exceeds an upper limit, while minimizing deterioration in uplink transmission quality.

### SOLUTION TO PROBLEM

The present invention provides a user terminal that is capable of communicating with a plurality of radio base stations via a plurality of component carriers in a radio communication system using a system band configurable with the plurality of component carriers, the user terminal comprising: a transmitting section that transmits an uplink physical channel at an uplink transmission timing, the plurality of component carriers being grouped into a plurality of timing groups, and the transmission timing being controlled per timing group; and a power control section that, when the uplink transmission timing is controlled per timing group, performs power scaling preferentially on physical channels in a full overlapping period in which the physical channels are of same subframe number and overlap each other across component carriers.

The present invention also provides a radio communication system using a system band configurable of a plurality of component carriers, the radio communication system comprising: a plurality of base station apparatuses that each form a cell; and a user terminal that is capable of communicating with one or more of the base station apparatuses via a plurality of component carriers, the base station apparatuses each comprising: a control section that controls an uplink transmission timing per timing group, one or more component carriers being grouped into timing groups; and a receiving section that receives an uplink physical channel from the user terminal, and the user terminal comprising: a transmitting section that transmits the uplink physical channel at the uplink transmission timing controlled per timing group; and a power control section that, when the uplink transmission timing is controlled per timing group, performs power scaling preferentially on physical channels in a full overlapping period in which the physical channels are of same subframe number and overlap each other across component carriers.

A radio communication method in a radio communication system in which a plurality of cells are formed, the radio communication system having a plurality of base station apparatuses that form the cells respectively; and a user terminal that is capable of communicating with one or more of the base station apparatuses via a plurality of component carriers, the radio communication method comprising the steps of: transmitting, by the user terminal, an uplink physical channel at an uplink transmission timing controlled per timing group; and when the uplink transmission timing is controlled per timing group, performing, by the user terminal, power scaling preferentially on physical channels in a full overlapping period in which the physical channels are of same subframe number and overlap each other across component carriers.

### TECHNICAL ADVANTAGE OF THE INVENTION

According to the present invention, it is possible to apply power scaling to a signal overlapping period in which uplink transmission power exceeds an upper limit while minimizing deterioration in uplink transmission quality.

### BRIEF DESCRIPTION OF THE DRAWINGS

Fig 1 is a diagram for explaining HetNet;
Fig. 2 is a diagram illustrating relationship between component carriers and TAGs;
Fig. 3 is a diagram illustrating displacement in transmission timing between TAGs;
Fig. 4 is a diagram illustrating an example of signal overlapping periods assumed when MTA is applied to a user terminal;
Fig. 5 is a diagram for explaining transition of transmission power when power scaling is performed preferentially on physical channels in the full overlapping period;
Fig. 6 is a diagram for explaining transition of transmission power when power scaling is performed without prioritizing physical channels in the full overlapping period;
Fig. 7 is a diagram illustrating an example of power scaling target table applied over a plurality of TAGs;
Fig. 8 is a diagram for explaining a set of a plurality of physical channels to which power scaling is applied;
Fig. 9 is a diagram for explaining the configuration of a radio communication system according to the present embodiment;
Fig. 10 is a block diagram schematically illustrating the configuration of a base station apparatus according to the present embodiment;
Fig. 11 is a block diagram illustrating the configuration of a baseband signal processing section of the base station apparatus;
Fig. 12 is a block diagram schematically illustrating the configuration of a mobile station apparatus according to the present embodiment;
Fig. 13 is a block diagram illustrating the configuration of a baseband signal processing section of the mobile station apparatus; and
Fig. 14 is a block diagram illustrating the configuration of a layer 1 processing section in the baseband signal processing section of the mobile station apparatus.

### DESCRIPTION OF EMBODIMENTS

As described above, when MTA introduced in Rel. 11-LTE is applied to a user terminal UE, there may occur a signal overlapping period between TAGs and in this signal overlapping period, transmission power may exceed a predetermined upper limit. In view of this, in the user terminal UE, there is a need to perform power adjustment (power scaling) so as not to exceed an upper limit of transmission power defined per CC and an upper limit of total transmission power of all the CCs in each signal overlapping period. However, if power scaling is applied at random to such a signal overlapping period, the signal power in the signal overlapping period reduces, which may cause deterioration in uplink transmission quality. Deterioration in uplink transmission quality depends on the order of signal overlapping periods to which power scaling is applied. The present inventors have noted that deterioration of uplink transmission quality can be prevented by determining in advance the priority of application of power scaling to the signal overlapping periods and have arrived at the present invention.

That is, the gist of the present invention is to provide a radio communication system comprising a plurality of base station apparatuses eNB each forming a cell and a user terminal UE capable of communicating with one or more of the base station apparatuses eNB via a plurality of component carriers, wherein when the user terminal UE transmits uplink physical channels at transmission timings controlled per TAG, power adjustment (power scaling) is performed preferentially on physical channels in an FO period in which the physical channels are of the same subframe number and overlap each other across component carriers. With this structure, as the physical channels in the FO period are power-scaled in preference to physical channels in the PO period and SO period, it is possible to minimize deterioration of uplink transmission quality that occurs when power scaling is performed preferentially on physical channels in the PO period or the like. Consequently, it is possible to apply power scaling to a signal overlapping period in which uplink transmission power exceeds an upper limit, while minimizing deterioration in uplink transmission quality.

The following description will be made specifically with reference to a network configuration illustrated in Fig. 1. In Fig. 1, the user terminal UE is connected to the macro cell (base station apparatus eNB) and is also connected to the low power cell (low power node LPN). In the present invention, the number of cells to which the user terminal UE is able to connect is not limited to two. The base station apparatus eNB and the low power node LPN are connected to each other via a backhaul link, and the low power node LPN is controlled by the base station apparatus eNB. The low power node LPN receives information required for communication with the user terminal UE (for example, TAG information) via the backhaul link from the base station apparatus eNB.

The base station apparatus eNB assigns a plurality of component carriers, CC #1 and CC #2 to the user terminal UE by carrier aggregation and also notifies the user terminal UE of the cell configuration in which one component carrier CC #1 is assigned to the macro cell and the other component carrier CC #2 is assigned to the low power cell. In addition, when assigning a plurality of component carriers to the user terminal UE and making such a cell configuration as to connect to a plurality of cells simultaneously, the base station apparatus eNB groups the plural component carriers assigned to the user terminal UE into TAGs and controls transmission timing per TAG. In the example illustrated in Fig. 1, CC #1 assigned to the macro cell is classed as TAG #1 and CC #2 assigned to the low power cell is classed as TAG #2.

The user terminal UE is able to transmit uplink physical data channels and uplink physical control channels via a plurality of component carriers such as CC #1 and CC #2. To be more specific, the user terminal UE controls the transmission timing of uplink subframes to be the transmission time T1 for communication with the macro cell (TAG #1, CC #1), and also controls the transmission timing of uplink subframes to be the transmission time T2 for communication with the low power cell (TAG #2, CC #2). Then, as the uplink transmission timings (T1, T2) are different between TAG #1 and TAG #2, there occur signal overlapping periods including a PO period (see Fig. 4).

When the transmission timing of an uplink signal per TAG is controlled by the base station apparatus eNB, the user terminal UE performs power adjustment (power scaling) preferentially on physical channels in the FO period where the physical channels are of the same subframe and overlap each other across component carriers (CCs). In this case, the user terminal UE is able to perform power adjustment (power scaling) in preference to the physical channels in the SO period in which the physical channels overlap each other within the same TAG and the physical channels in the PO period in which the physical channels of different subframe numbers overlap each other across CCs.

As described in detail later, if power scaling is performed without prioritizing the physical channels in the FO period, signal power of a physical channel in the PO period may be reduced as compared with the case where power scaling is preformed preferentially on the physical channels in the FO period, which may cause deterioration in uplink transmission quality. As described above, by performing power scaling preferentially on the physical channels in the FO period, it is possible to prevent the situation of reduction in signal power of physical channels in the PO period. This makes it possible to minimize deterioration in uplink transmission quality that may occur when power scaling is performed preferentially on physical channels in the PO period and also to prevent deterioration in uplink transmission quality.

In addition, when power scaling is performed without giving priority to physical channels in the FO period, there may occur the situation in which power scaling is first performed on physical channels in the PO period and then, power scaling is performed again on physical channels in the FO period corresponding to subframes including the PO period (in other words, power scaling is performed multiple times on the same signal overlapping period). As described above, if power scaling is performed preferentially on physical channels in the FO period, it is possible to reduce the number of times of power scaling in the user terminal UE, which makes it possible to simplify control in the user terminal UE and to reduce power consumption associated with power scaling.

Further, when power scaling is performed preferentially on physical channels in the FO period, the user terminal UE performs power scaling in such a manner as to meet an upper limit of transmission power defined per CC and an upper limit of total transmission power of all the CCs (that is, not to exceed both of the upper limits). Since power scaling is thus performed in such a manner as not to exceed an upper limit of transmission power defined per CC and an upper limit of total transmission power of all the CCs, it is possible to scale the transmission power effectively within a predetermined permissible range of transmission power to transmit uplink physical channels in the FO period.

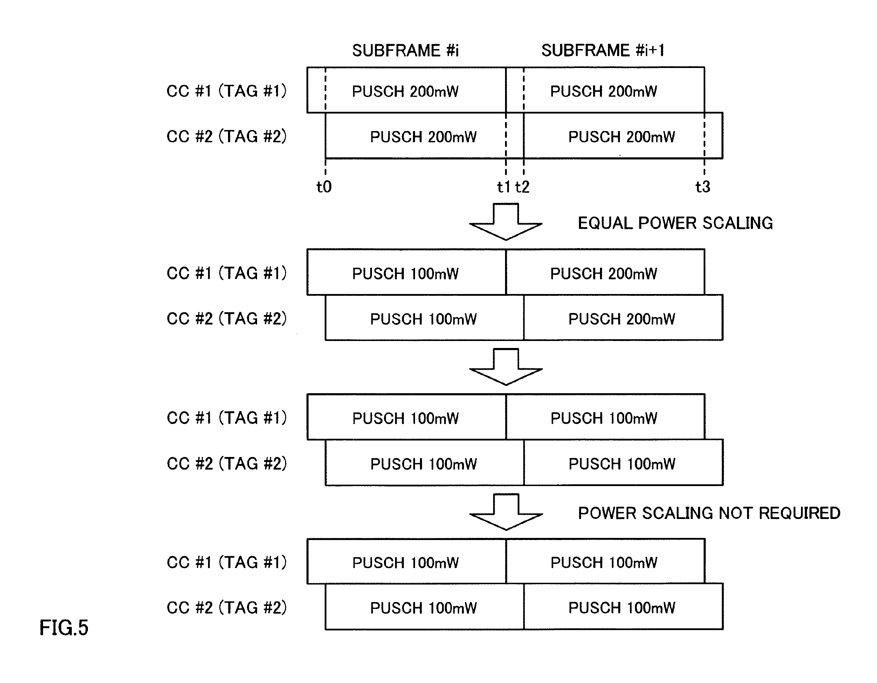

Next description is made about transition of transmission power when power scaling is performed preferentially on physical channels in the FO period. Fig. 5 is an explanatory view of transition of transmission power when power scaling is performed preferentially on the physical channels in the FO period. In the following description, for example, it is assumed that in HetNet illustrated in Fig. 1, CC #1 (TAG #1) is used to transmit a physical uplink shared channel (PUSCH) to the macro cell and CC #2 (TAG #2) is used to transmit a PUSCH to the low power cell. Also in the description, it is assumed that the upper limit of transmission power defined per CC is 100 mW and the upper limit of total transmission power of all CCs (CC #1 and CC #2) is 200 mW.

In the example illustrated in Fig. 5, there occurs FO period in TAG #1 and TAG #2 between the time t0 and the time t1 and between the time t2 and the time t3, and there occurs PO period in TAG #1 and TAG #2 between the time t1 and the time t2. Also in Fig. 5, for convenience of explanation, it is assumed that before execution of power scaling, the user terminal UE transmits PUSCHs to both of the macro cell and the low power cell with transmission power of 200 mW.

Further, the user terminal UE performs power scaling to reduce signal power equally (equal power scaling). Here, when performing power scaling on physical channels in the FO period, the user terminal UE is able to perform equal power scaling per subframe. When performing power scaling on physical channels in the PO period, the user terminal UE is able to perform equal power scaling only on applicable PO period.

When power scaling is performed preferentially on physical channels in the FO period, the user terminal UE first notes transmission power in the FO period in the subframe #i to perform equal power scaling. With this scaling, transmission power of PUSCHs of both of TAG #1 and TAG #2 in the subframe #i is scaled from 200 mW to 100 mW (second step in Fig. 5). Then, the user terminal UE notes transmission power in the FO period in the subframe #i+1 to perform equal power scaling. With this scaling, transmission power of PUSCHs of both of TAG #1 and TAG #2 in the subframe #i+1 is scaled from 200 mW to 100 mW (third step in Fig. 5).

When power scaling is thus performed on the FO period at the subframe #i+1, the problematic situation is solved in which the transmission power in the PO period between the time t1 and the time t2 exceeds an upper limit of total transmission power of all the CCs. Accordingly, the user terminal is not required to perform power scaling on the PO period (fourth step in Fig. 5). Therefore, in the example illustrated in Fig. 5, when power scaling is performed preferentially on the physical channels in the FO period, the user terminal UE has only to perform power scaling twice to scale transmission power effectively within a predetermined permissible range of transmission power and transmit uplink physical channels in the FO period.

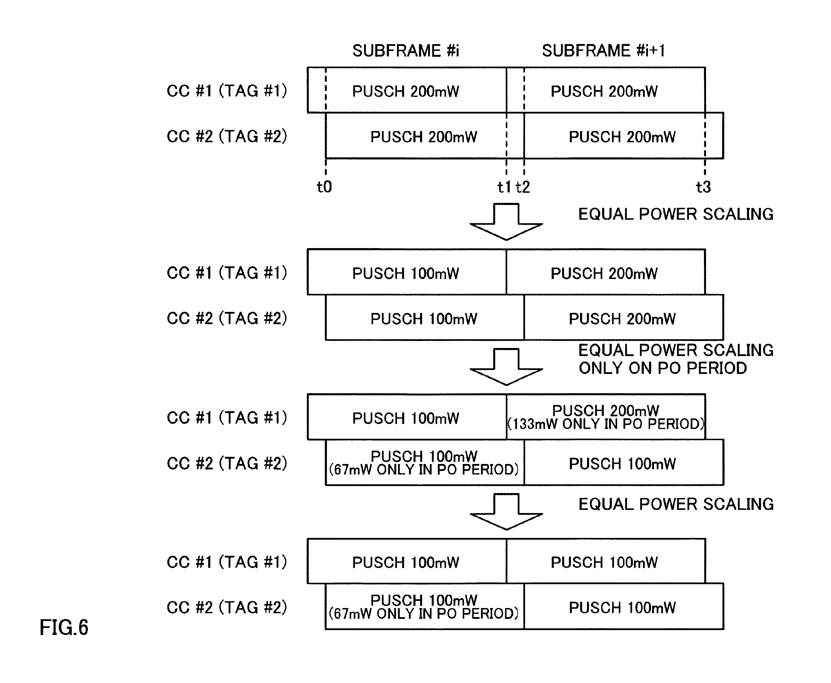

Fig. 6 is a diagram for explaining transition of transmission power when power scaling is performed without giving priority to physical channels in the FO period. Here, in Fig. 6, it is assumed that power scaling is performed on the signal overlapping period in chronological order. Here, assignment of CCs and TAGs, signal overlapping periods occurring between TAGs, a physical channel to be transmitted from each CC and its transmission power are the same as those illustrated in Fig. 5.

When performing power scaling in a signal overlapping period in chronological order, the user terminal UE first notes transmission power in the FO period at the subframe #i and performs equal power scaling. By this power scaling, transmission power of both of TAG #1 and TAG #2 at the subframe #i is scaled from 200 mW to 100 mW (second step in Fig. 6)

Then, the user terminal UE notes transmission power in the PO period between the time t1 and the time t2. In the PO period between the time t1 and the time t2, transmission power of PUSCH of TAG #2 is 100 mW, while transmission power of PUSCH of TAG #1 is 200 mW, and total transmission power of all the CCs exceeds an upper limit. Therefore, the user terminal UE performs equal power scaling on signal power in this PO period. By this power scaling, the transmission power at the PO period of TAG #1 is corrected from 200 mW to 133 mW and the transmission power at the PO period of TAG #2 is corrected from 100 mW to 67 mW (third step in Fig. 6).

Then, the user terminal UE notes transmission power in the FO period at the subframe #i+1 and performs equal power scaling. By this equal power scaling, transmission power of PUSCHs of both of TAG #1 and TAG #2 is corrected from 200 mW to 100 mW (fourth step in Fig. 6). When power scaling is thus performed in a signal overlapping period in chronological order, the user terminal UE needs to perform power scaling three times. Then, the transmission power in the PO period between the time t1 and the time t2 in TAG #2 is set to 67 mW. Accordingly, uplink transmission quality of this physical channel in this PO period is possibly deteriorated as compared with the case in which power scaling is performed preferentially on physical channels in the FO period.

Here, when performing power scaling preferentially over physical channels in the FO period, if the user terminal UE is configured to be connected simultaneously to three or more CCs, the user terminal UE may select, at random, a plurality of (two or more) CCs to which to apply power scaling. With this structure, it is possible to prevent the situation in which power scaling is performed concentratedly on physical channels in the FO period in specific CCs, and accordingly, it is possible to prevent the situation in which uplink transmission quality corresponding to the physical channels in the FO period in the specific CCs deteriorates.

Further, when performing power scaling preferentially on physical channels in the FO period, if the user terminal UE is configured to be connected simultaneously to three or more CCs, the user terminal UE may select CCs to which to apply power scaling cyclically. With this structure, CCs to which to apply power scaling are distributed, thereby to be able to prevent the situation power scaling is performed concentratedly on physical channels in the FO period in specific CCs. Consequently, it is possible to prevent the situation in which uplink transmission quality corresponding to the physical channels in the FO period in the specific CCs deteriorates.

Besides, when performing power scaling preferentially on physical channels in the FO period, the user terminal applies power scaling based on the predetermined priority per physical channel. For example, when the set of physical channels to which power scaling is applied is configured of two physical channels of different types, power scaling can be applied based on the predetermined priority per physical channel.

The priority per physical channel may be determined, for example, based on importance of a signal considering influence on throughput performance, in the order of reference signal for channel quality measurement (SRS: Sounding Reference Signal), a Physical Uplink Shared Channel (PUSCH), a Physical Uplink Control Channel (PUCCH), and a Physical Random Access Channel (PRACH). That is, in application of power scaling, the priority can be defined such that the SRS has the highest priority and the PRACH has the lowest priority. These priorities correspond to those defined in accordance with whether a target physical channel a contains a control signal or not.

In Rel. 10-LTE, there are defined, as uplink physical channels controlled per CC, PRACH, PUCCH, PUSCH and SRS. PRACH is used in initial access from the user terminal UE to network. The user terminal UE receives PRACH parameters (frequency position, subframe position, Zadoff-Chu sequence number, etc.), uplink CC information (center frequency, bandwidth, etc.) and so on as necessary broadcast information from downlink CCs detected by cell search and transmits PRACH on uplink CCs corresponding to the downlink CCs. PUCCH is multiplexed to both ends of the band (intra-subframe frequency hopping is applied), and carries ACK/NACK as a response signal to a downlink transmission signal (response), CQI (Channel Quality Indicator) report, and scheduling request. CQI is quality information indicating quality of received data or communication path quality. PUSCH is mapped with UL-SCH (uplink shared channel as one of transport channels).

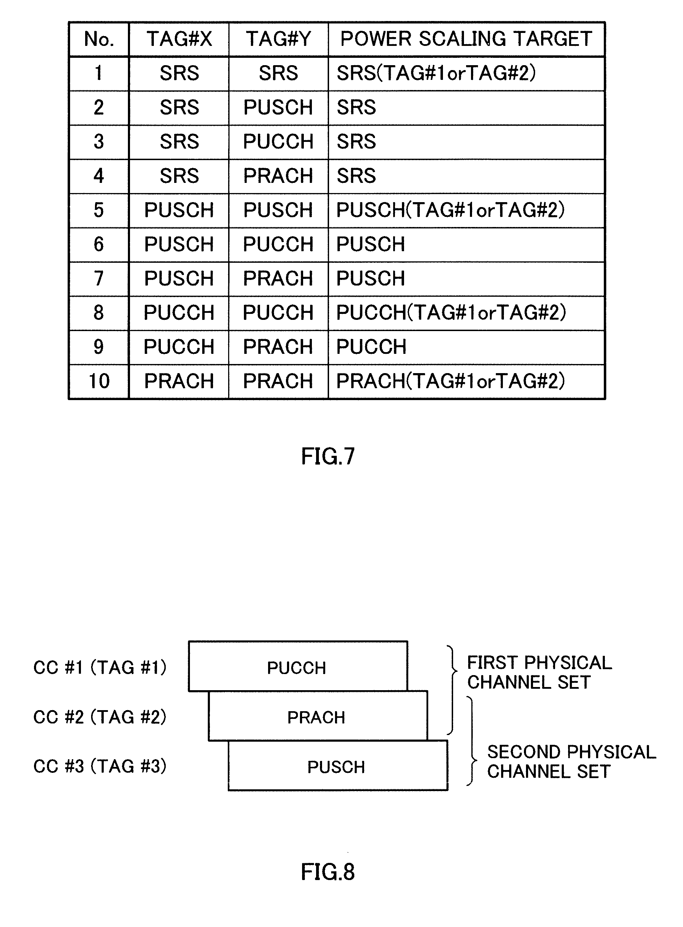

Here, description is made about a specific example of application of power scaling based on the predetermined priority per physical channel. Fig. 7 is a diagram illustrating an example of power scaling target table defined over a plurality of TAGs. In the power scaling target table illustrated in Fig. 7, there are defied physical channel sets allocated to a plurality of TAGs and physical channels as power scaling target. In the power scaling target table illustrated in Fig. 7, for convenience of explanation, physical channels allocated to two TAGs, TAG #X and TAG #Y, are illustrated. However, the number of TAGs defined in the power scaling target table is not limited to this, but may be modified appropriately.

In the power scaling target table illustrated in Fig. 7, when the same physical channel is allocated in TAG "X and TAG #Y, a physical channel of TAG predetermined under operation of the user terminal UE or informed in advance from the base station apparatus eNB is registered. Besides, in TAG #X and TAG #Y, when different physical channels are allocated, a physical channel of higher priority in application of power scaling is registered as a power scaling target in accordance with the above-mentioned priority.

For example, when SRS is assigned to TAG #X and PUSCH is assigned to TAG #Y, SRS is registered as a power scaling target (Number 2 in Fig. 7). When PUSCH is assigned to TAG #X and PUCCH is assigned TAG #Y, PUSCH is registered as a power scaling target (Number 6 in Fig. 7). And, when PUCCH is assigned to TAG #X and PRACH is assigned to TAG #Y, PUCCH is registered as a power scaling target (Number 9 in Fig. 7)

Accordingly, in performing power scaling preferentially on physical channels in the FO period, when SRS is assigned to TAG #X and PUSCH is assigned to TAG #Y, the user terminal UE reduces transmission of the SRS assigned to TAG #X. In the same manner, when PUSCH is allocated to TAG #X and PUCCH is allocated to TAG #Y, the user terminal UE reduces transmission power of the PUSCH assigned to TAG #X.

In the power scaling target table illustrated in Fig. 7, it is possible to specify a power scaling target of a set of physical channels (hereinafter, also referred to as "physical channel set" where appropriate) assigned to two TAGs, TAG #X and TAG #Y. Here, when three or more TAGs are allocated to plural CCs, there exist a plurality of physical channel sets. For example, as illustrated in Fig. 8, a case is assumed in which TAG #1 is assigned to CC #1, TAG #2 is assigned to CC #2 and TAG #3 is assigned to CC #3. In this case, the physical channel set to which to apply power scaling includes a first physical channel set of PUCCH transmitted in TAG #1 and PRACH transmitted in TAG #2 and a second physical channel set of PRACH transmitted in TAG #2 and PUSCH transmitted in TAG #3.

Thus, when there are a plurality of physical channel sets to which to apply power scaling, for example, the user terminal UE is able to select, as a power scaling target, a physical channel set including a physical channel with no control signal. Then, the user terminal UE determines a physical channel as a power scaling target in accordance with registration in the power scaling target table as illustrated in Fig. 7. Here, PUCCH and PRACH constitute physical channels with control signals and PUSCH and SRS constitute physical channels with no control signal.

A specific example will be described with reference to Fig. 8 below. For example, PUCCH and PRACH that make up the first physical channel set illustrated in Fig. 8 each contain a control signal. As for PRACH and PUSCH that make up the second physical channel set, the former contains a control signal but the latter does not contain a control signal. Therefore, the user terminal UE is able to select the second physical channel set as a target for power scaling. Then, the user terminal UE determines a PUSCH (TAG #3) as a physical channel as a power scaling target in accordance with the registration in the power scaling target table illustrated in Fig. 7.

As a method for selecting a physical channel set as power scaling target, it is desirable to determine a physical channel set based on the importance of a signal considering throughput performance, as well as the priority of the above-mentioned physical channel. For example, the physical channel set as a power scaling target may be selected in the order of SRS, PUSCH, PUCCH and PRACH. In this case, the physical channel set as a power scaling target is selected in the order illustrated in Fig. 7. That is, in application of power scaling, the physical channel set including SRS and SRS illustrated in the number 1 in Fig. 7 has the highest priority and the physical channel set including PRACH and PRACH illustrated in the number 10 in Fig. 7 has the lowest priority.

In the description made up to this point, it is premised that power scaling is applied prioritizing the physical channels in the FO period when there occurs a signal overlapping period. However, as to a method for applying power scaling to the signal overlapping period, it is not limited to this but may be modified appropriately. For example, power scaling may be performed not by prioritizing the physical channels in the FO period, but by using the predetermined priority per physical channel as a basis (modified example 1). For example, the user terminal UE is able to perform power scaling in the order of SRS, PUSCH, PUCCH and PRACH. In this case, for example, it is preferable to use the power scaling target table as illustrated in Fig. 7.

Specifically, when there exist a plurality of physical channel sets to which to apply power scaling (see Fig. 8), a physical channel set including a physical channel with no control signal is preferentially selected as a power scaling target. Then, the user terminal UE is able to determine physical channels as a power scaling target in accordance with the registration in the power scaling target table as illustrated in Fig. 7.

In addition, power scaling may be performed by prioritizing a physical channel corresponding to TAG assigned to a secondary cell (Scell) rather than a physical channel corresponding to TAG assigned to a primary cell (Pcell) (modified example 2). In the Pcell, many signals that are required to maintain uplink transmission quality such as control signals are transmitted. If power scaling is performed prioritizing the physical channel corresponding to the Scell rather than the physical channel corresponding to the Pcell, it is possible to prevent reduction in transmission power of the physical channel corresponding to the Pcell and to minimize deterioration of uplink transmission quality.

These modified examples 1 and 2 may be adopted in combination. When combining the modified examples 1 and 2, the content registered in the power scaling target table illustrated in Fig. 7 is preferably added with identification information that indicates whether TAG #X (or TAG #Y) is Pcell or Scell. In this case, it is possible to specify a physical channel as a power scaling target efficiently in accordance with the content of the power scaling target table.

Besides, out of physical channels that are transmitted in various signal overlapping periods, power scaling may be performed only on a specific physical channel that is transmitted in a specific signal overlapping period (modified example 3). In this case, for example, it may be assumed that the PO period is designated as a specific signal overlapping period and the PUSCH is designated as the specific physical channel. Thus, if power scaling is performed only on the PUSCH that is transmitted in the PO period, it is possible to restrict the power scaling target to a part of physical channels, thereby making it possible to minimize deterioration of uplink transmission quality without need to make large change in the existing specifications.

Further, as illustrated in Fig. 6, the user terminal UE is also able to perform power scaling across signal overlapping periods in the chronological order (modified example 4). In this case, as power scaling is performed on signal overlapping periods in the chronological order, it is possible to perform power scaling successively, irrespective of the type of a signal overlapping period.

Next description is made about an example of a base station apparatus and a user terminal to which the above-described radio communication method is applied. In the following description, a radio access system for LTE and LTE-A is taken as an example, however, this is not intended for imposing any restrictions on application to other systems.

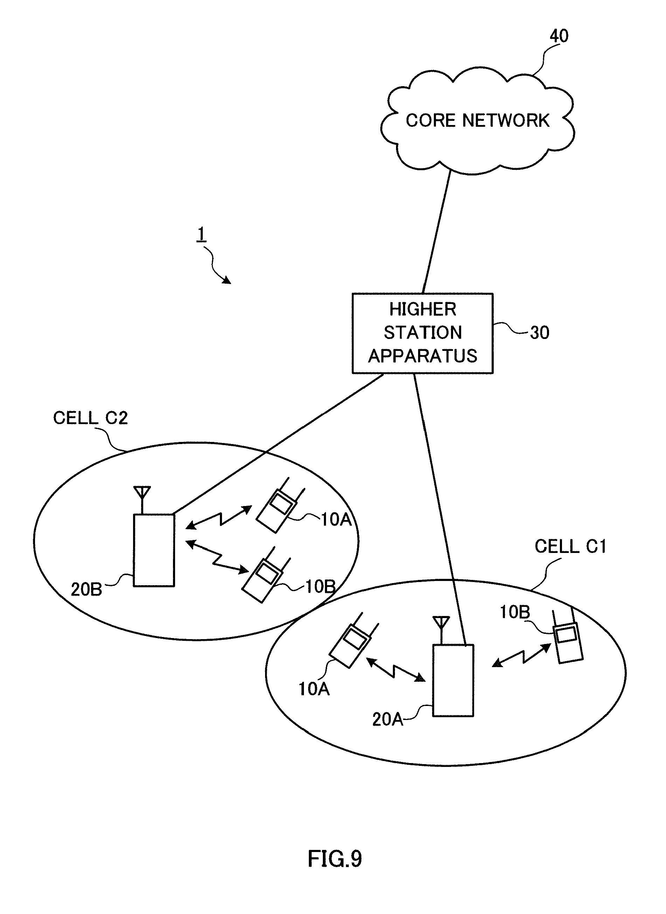

Fig. 9 illustrates a network configuration of a radio communication system to which the ratio communication method according to an embodiment of the preset invention is applied. The radio communication system 1 is configured to include base station apparatuses 20A and 20B and a plurality of first and second mobile station apparatuses 10A and 10B that communicate with the base station apparatuses 20A and 20B. The base station apparatuses 20A and 20B are connected to a higher station apparatus 30, which is then connected to a core network 40. In addition, the base station apparatuses 20A and 20B are connected to each other wired or wirelessly. The first and second mobile station apparatuses 10A and 10B are able to communicate with the base station apparatuses 20A and 20B in cells C1 and C2. The higher station apparatus 30 includes, but is not limited to, an access gateway apparatus, a radio network controller (RNC), a mobility management entity (MME).

Each of the first and second mobile station apparatuses 10A and 10B comprises an LTE terminal or an LTE-A terminal, however, in the following description, it is described as a mobile station apparatus 10, unless specifically stated otherwise. In addition, for convenience of explanation, it is the first and second mobile station apparatuses 10A and 10B that perform radio communications with the base station apparatuses 20A and 20B, however, more specifically, the mobile station apparatus may be a user terminal (UE) including a mobile terminal apparatus and a fixed or static terminal apparatus.

In the radio communication system 1, as multi access schemes, OFDMA (Orthogonal Frequency Division Multiple Access) is adopted for the downlink and SC-FDMA (Single Carrier Frequency Division Multiple Access) is adopted for the uplink. However, the uplink radio access scheme is not limited to this. OFDMA is a multi-carrier transmission scheme to perform communication by dividing a frequency band into a plurality of narrow frequency bands (subcarriers) and mapping data to each subcarrier. SC-FDMA is a single carrier transmission scheme to perform communications by dividing, per terminal, the system band into bands formed with one or continuous resource blocks, and allowing a plurality of terminals to use mutually different bands thereby to reduce interference between terminals.

Here, description is made about communication channels in Evolved UTRA and UTRAN. As for downlink, there are used a physical downlink shared channel (PDSCH) that is used by each mobile station apparatus 10 on a shared basis and a physical downlink control channel (PDCCH) as a downlink control channel (also called downlink L1/L2 channel). This physical downlink shared channel is used to transmit user data, that is, normal data signals. The physical downlink control channel is used to feed back precoding information for uplink MIMO transmission, user ID for communication using the physical downlink shared channel, transport format information of the user data (that is, Downlink Scheduling Information), user ID for communication using a physical uplink shared channel, transport format information of the user data (that is, Uplink Scheduling Grant) and so on.

Further, in the downlink, broadcast channels are transmitted, including P-BCH (Physical-Broadcast Channel) and D-BCH (Dynamic Broadcast Channel). P-BCH is used to transmit information which is MIB (Master Information Block), and D-BCH is used to transmit information which is SIB (System Information Block). D-BCH is mapped to the PDSCH and is transmitted from the base station apparatus 20 to the mobile station apparatus 10.

As for the uplink, there are used a physical uplink shared channel (PUSCH) that is used by each mobile station apparatus 10 on a shared basis and a physical uplink control channel (PUCCH) as an uplink control channel. The physical uplink shared channel (PUSCH) is used to transmit user data, that is, normal data signals. And, the physical uplink control channel (PUCCH) is used to transmit precoding information for downlink MIMO transmission, transmission acknowledgement information for a downlink shared channel, downlink radio quality information (CQI) and so on.

Also in the uplink, there is defined a physical random access channel (PRACH) for initial connection or the like. The mobile station apparatus 10 is configured to transmit random access preamble to the base station apparatus 20 by PRACH.

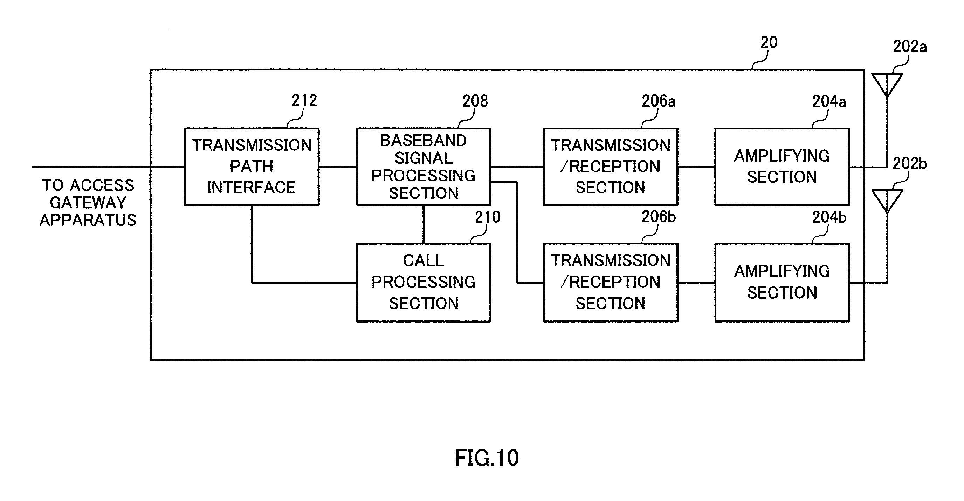

With reference to Fig. 10, description is made about an overall configuration of the base station apparatus 20 according to the present embodiment. Note that the base station apparatuses 20A and 20B have fundamentally the same configurations, and they are each described as a base station apparatus 20. In addition, the first and second mobile station apparatuses 10A and 10B also have the same configurations, and they are each described as a mobile station apparatus 10.

The base station apparatus 20 is configured to have a plurality of transmission/reception antennas 202a, 202b, ..., for MIMO transmission, amplifying sections 204a, 204b, ..., transmission/reception sections 206a, 206b, ..., a baseband signal processing section 208, a call processing section 210 and a transmission path interface 212. The number of transmission/reception antennas 202a, 202b, ...provided is, for example, eight, and the amplifying sections 204a, 204b, ... and the transmission/reception sections 206a, 206b, ..., are provided equal in number to the transmission/reception antennas.

User data that is transmitted on the downlink from the base station apparatus 20 to the mobile station apparatus 10 is input from a higher station apparatus that is positioned above the base station apparatus 20, for example, an access gateway apparatus 30, through the transmission path interface 212, into the baseband signal processing section 208.

In the baseband signal processing section 208, signals are subjected to PDCP layer processing, RLC (Radio Link Control) layer transmission processing such as division and coupling of user data and RLC retransmission control transmission processing, MAC (Medium Access Control) retransmission control, including, for example, HARQ (Hybrid Automatic Repeat request) transmission processing, scheduling, transport format selection, channel coding, inverse fast Fourier transform (IFFT) processing, and precoding processing. Then, the resultant signals are transferred to the transmission/reception sections 206a, 206b. As for signals of the physical downlink control channel, transmission processing is performed, including channel coding and inverse fast Fourier transform, and the resultant signals are transmitted to the transmission/reception sections 206a, 206b.

Also, the baseband signal processing section 208 notifies each mobile station apparatus 10 of control information for communication in the cell by a broadcast channel. Control information for communication in the cell includes, for example, uplink or downlink system bandwidth, resource block information allocated to the mobile station apparatus 10, identification information of root sequences (Root Sequence Index) for generating random access preamble signals in PRACH and so on.

In the transmission/reception sections 206a, 206b, baseband signals which are precoded per antenna and output from the baseband signal processing section 208 are subjected to frequency conversion processing into a radio frequency band. The radio frequency signals are amplified by the amplifying sections 204a, 204b and transmitted from the transmission/reception antennas 202a, 202b.

Meanwhile, as for data to be transmitted on the uplink from the mobile station apparatus 10 to the base station apparatus 20, radio frequency signals are received in the transmission/reception antennas 202a, 202b, amplified in the amplifying sections 204a, 204b, subjected to frequency conversion and converted into baseband signals in the transmission/reception sections 206a, 206b, and are input to the baseband signal processing section 208. The transmission/reception sections 206 each constitute a reception section for receiving uplink physical channel signals from the mobile station apparatus 10.

The baseband signal processing section 208 performs FFT processing, IDFT processing, error correction decoding, MAC retransmission control reception processing, and RLC layer and PDCP layer reception processing on the user data included in the received baseband signals. Then, the resultant signals are transferred to the access gateway apparatus 30 through the transmission path interface 212.

The call processing section 210 performs call processing such as setting up and releasing a communication channel, manages the state of the base station apparatus 20 and manages the radio resources.

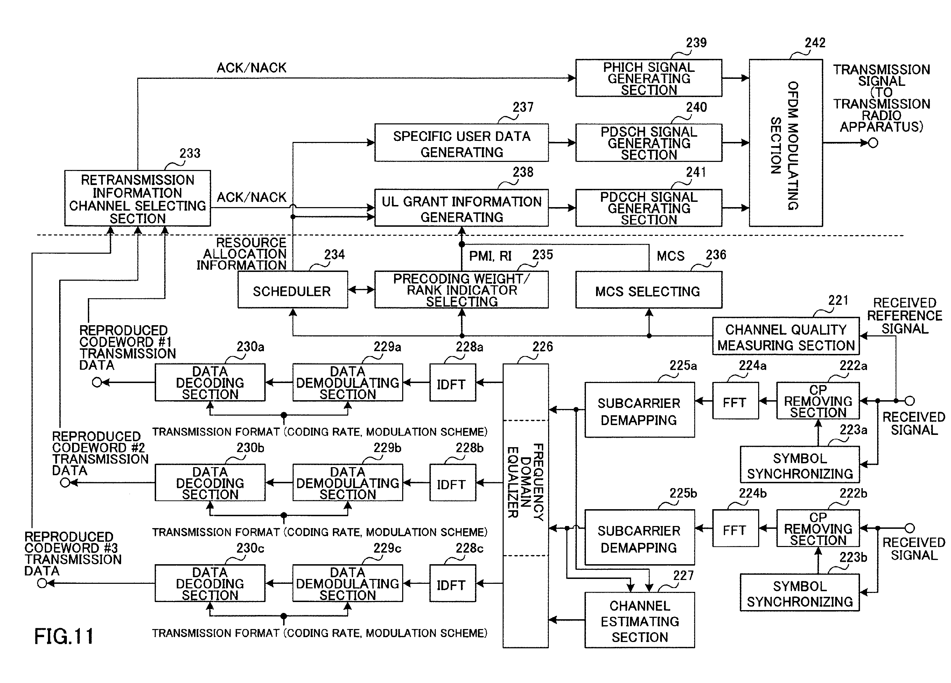

Here, with reference to Fig. 11, description is made about the configuration of the baseband signal processing section 208 of the base station apparatus 20 according to the present embodiment. Fig. 11 is a functional block diagram of the baseband signal processing section 208 of the base station apparatus 20 according to the present embodiment. Here, in Fig. 11, for convenience of explanation, it is illustrated as including a scheduler 234 and so on.

Reference signals (quality measurement reference signals) included in reception signals are input to a channel quality measuring section 221. The channel quality measuring section 221 measures uplink channel quality information (CQI) based on the reception state of the reference signals received from the mobile station apparatus 10. In the meantime, the reception signals input to the baseband signal processing section 208 are input to cyclic prefix removing sections 222a, 222b, in which cyclic prefixes added to the reception signals are removed. Then, the signals are subjected to Fourier transform in fast Fourier transform (FFT) sections 224a, 224b and converted into frequency domain information. Symbol synchronizing sections 223a, 223b estimate synchronization timing from the reference signals included in the reception signals and output estimation results to the CP removing sections 222a, 222b.

Reception signals converted into frequency domain information are demapped in the frequency domain in subcarrier demapping sections 225a, 225b. The subcarrier demapping sections 225a, 225b perform demapping corresponding to mapping in the mobile station apparatus 10. Here, in the reception signals received in the uplink, reception signals to be input to the subcarrier demapping section 225b is a combination of two uplink data codewords #2 and #3. A frequency domain equalizing section 226 equalizes reception signals based on a channel estimation value given from the channel estimating section 227. The channel estimating section 227 estimates a channel state per component carrier from reference signals included in the reception signals. The frequency domain equalizing section 226 equalizes reception signals (codewords) per component carrier.

Inverse Discrete Fourier Transform (IDFT) sections 228a, 228b, 228c perform inverse discrete Fourier transform on the reception signals and convert frequency domain signals back to time domain signals. Data demodulating sections 229, 229b, 229c and data decoding sections 230a, 230b, 230c reproduce uplink user data based on a transmission format (coding rate, modulation scheme) per component carrier. With this reproduction, transmission data of codeword #1 corresponding to the first transport block, transmission data of codeword #2 corresponding to the second transport block and transmission data of codeword #3 corresponding to the third transport block are reproduced.

The reproduced transmission data of codewords #1, #2 and #3 are output to a retransmission information channel selecting section 233. The retransmission information channel selecting section 233 determines whether or not it is necessary to retransmit transmission data of codewords #1, #2 and #3 (ACK/NACK). Then, based on whether or not it is necessary to retransmit transmission data of codewords #1, #2 and #3, retransmission related information such as NDI information and RV information is generated. Besides, the retransmission information channel selecting section 233 selects a channel to transmit retransmission information (PHICH or PDCCH (UL grant)).

A scheduler 234 determines uplink and downlink resource allocation information based on channel quality information (CQI) given from the channel quality measuring section 221 and PMI information and RI information given from a precoding weight/rank indicator selecting section 235 described later. The scheduler 234 constitutes a control section, and when the mobile station apparatus 10 is allocated with a plurality of component carriers and configured to communicate simultaneously with a plurality of cells, the plural component carriers allocated to the mobile station apparatus 10 are grouped into TAGs and the transmission timing per TAG is controlled.

The precoding weight/rank indicator selecting section 235 determines a precoding weight (PMI) for controlling the phase and/or amplitude of a transmission signal per antenna in the mobile station apparatus 10 from the uplink reception quality in a resource block allocated to the mobile station apparatus 10 based on channel quality information (CQI) given from the channel quality measuring section 221. The precoding weight/rank indicator selecting section 235 determines the rank indicator (RI) indicating the number of spatially-multiplexed layers on the uplink based on channel quality information (CQI) given from the channel quality measuring section 221.

An MCS selecting section selects a modulation scheme and channel coding rate (MCS) based on the channel quality information (CQI) given from the channel quality measuring section 21.

A specific user data generating section 237 generates downlink transmission data (specific user data) for each mobile station apparatus 10 from user data input from the higher station apparatus 30 such as an access gateway apparatus, in accordance with the resource allocation information given from the scheduler 234.

A UL grant information generating section 238 generates a DCI formation including the above-mentioned UL grant based on ACK/NACK information and retransmission related information (NDI information, RV information) given from the retransmission information channel selecting section 233, resource allocation information given from the scheduler 234, PMI and RI information given from the precoding weight/rank indicator selecting section 235 and MCS information given from the MCS selecting section 236.

A PHICH signal generating section 239 generates a PHICH signal including acknowledgement of Hybrid ARQ indicating whether or not to retransmit a transport block to the mobile station apparatus 10, based on ACK/NACK information and retransmission related information (NDI information, RV information) given from the retransmission information channel selecting section 233.

A PDSCH signal generating section 234 generates downlink transmission data to be transmitted actually by a physical downlink shared channel (PDSCH), based on downlink transmission data (specific user data) generated in the specific user data generating section 237. A PDCCH signal generating section 241 generates PDCCH signals to be multiplexed with the physical downlink control channel, based on DCI formation including UL grant generated by the UL grant information generating section 238.

PHICH signals, PDSCH signals and PDCCH signals generated by these PHICH signal generating section 239, the PDSCH signal generating section 240 and the PDCCH signal generating section 241 are input to an OFDM modulating section 242. The OFDM modulating section 242 performs OFDM modulation processing on two-series signals including these PHICH signals, PDSCH signals and PDCCH signals and outputs them to the transmission/reception sections 206a, 206b.

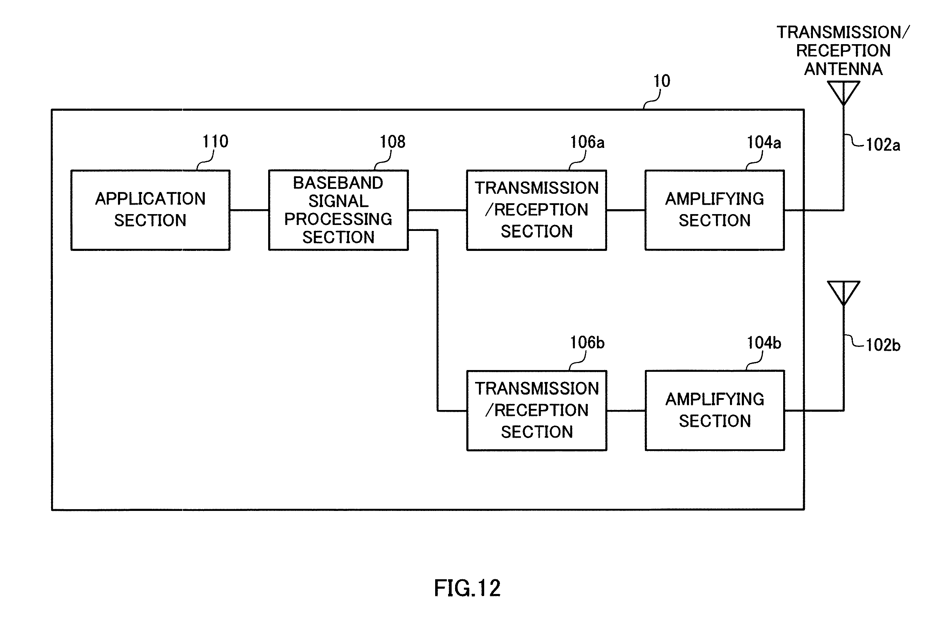

Next description is made, with reference to Fig. 12, about the configuration of the mobile station apparatus 10 according to the present embodiment. The mobile station apparatus 10 according to the present embodiment has, as illustrated in Fig. 12, two transmission/reception antennas 102a, 102b for MIMO transmission, amplifying sections 104a, 104b, transmission/reception sections 106a, 106b, a baseband signal processing section 108, and an application section 110. The transmission/reception sections 106 each constitute a transmission section for transmitting uplink physical channel signals.

As for the downlink data, radio frequency signals received by the two transmission/reception antennas 102a, 102b are amplified in the amplifying sections 104a, 104b, and then, subjected to frequency conversion and converted into baseband signals in the transmission/reception sections 106a, 106b. These baseband signals are subjected to FFT processing, error correction coding, retransmission control reception processing and so on in the baseband signal processing section 108. In this downlink data, downlink user data is transferred to an application section 110. The application section 110 performs processing related to higher layers above the physical layer and the MAC layer. In the downlink data, broadcast information is also transferred to the application section 110.

As for the uplink user data, that is input from the application section 110 to the baseband signal processing section 108. In the baseband signal processing section 108, retransmission control (H-ARQ: Hybrid ARQ) transmission processing, channel coding, precoding, DFT processing, IFFT processing and so on are performed, and the resultant signals are transferred to transmission/reception sections 106a, 106b In the transmission/reception sections 106a, 106b, the baseband signals output from the baseband signal processing section 108 are subjected to frequency conversion and converted into a radio frequency band. After that, the frequency-converted radio frequency signals are amplified in the amplifying sections 104a, 104b, and then, transmitted from the transmission/reception antennas 102a, 102b.

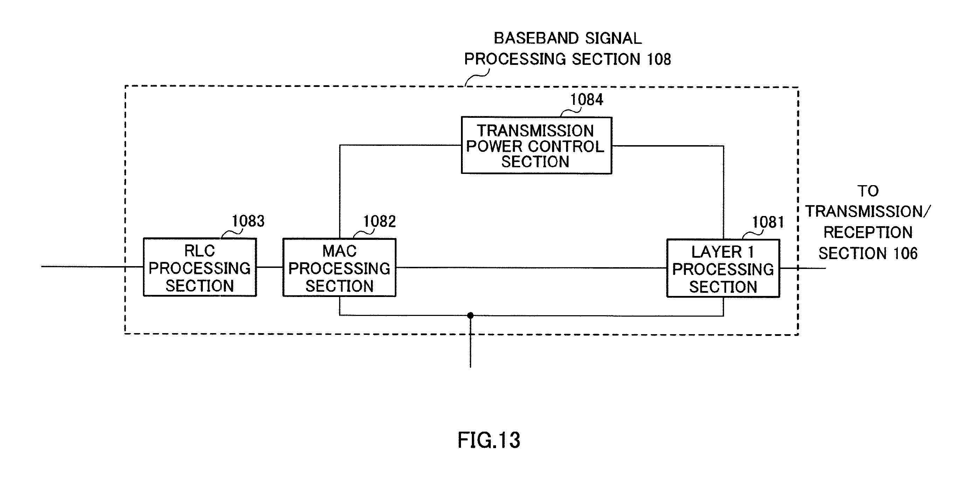

Fig. 13 is a block diagram illustrating the configuration of the baseband signal processing section 108 provided in the mobile station apparatus 10. The baseband signal processing section is configured to include mainly a layer 1 processing section 1081, a MAC processing section 1082, an RLC processing section 1083 and a transmission power control section 1084.

The layer 1 processing section 1081 mainly performs processing related to the physical layer. The layer 1 processing section 1081 performs, for example, processing such as channel decoding, discrete Fourier transform, frequency demapping, inverse Fourier transform and data demodulation on signals received on the downlink. Besides, the layer 1 processing section 1081 performs processing such as channel coding, data modulation, frequency mapping and inverse Fourier transform (IFFI) on signals to be transmitted on the uplink.

The MAC processing section 1082 performs MAC layer retransmission control (Hybrid ARQ), analysis of downlink scheduling information (identification of a transmission format of PDSCH, specification of PDSCH resource blocks) and the like on signals received on the downlink. Besides, the MACK processing section 1082 performs processing MAC retransmission control, analysis of uplink scheduling information (identification of PUSCH transmission format, specification of PUSCH resource blocks) and the like on signals to be transmitted on the uplink.

The RLC processing section 1083 performs packet dividing, packet coupling, RLC layer retransmission control and the like on packets received on the downlink and packets to be transmitted on the uplink.

The transmission power control section 1084 constitutes a power control section, and when MTA is applied, if transmission power per CC exceeds an upper limit or total transmission power of all CCs exceeds an upper limit, the transmission power control section 1084 applies power scaling to TAGs (cell, CC, uplink physical channel or packet) by any of the above-described methods, thereby to reduce transmission power.

As described above, the transmission power control section 1084 performs power scaling preferentially on physical channels in the FO period. For example, the transmission power control section 1084 is able to perform power scaling in preference to physical channels in the PO period. When performing power scaling preferentially on the physical channels in the FO period, if the mobile station apparatus is configured to be connected to three or more CCs simultaneously, the transmission power control section 1084 is able to select a plurality of (two or more) CCs to which to apply power scaling, at random or is able to select CCs to which to apply power scaling cyclically.

When performing power scaling preferentially on physical channels in the FO period, the transmission power control section 1084 is able to apply power scaling based on the predetermined priority per physical channel. The priority per physical channel indicates a priority to which to apply power scaling. For example, the priority can be determined in the order of, for example, SRS, PUSCH, PUCCH and PRACH. The priority of the SRS may be set to the highest and the priority of the PRACH may be set to the lowest. For example, the transmission power control section 1084 is able to perform power scaling based on the priority per physical channel, using the power scaling target table illustrated in Fig. 7. In addition, when there exist a plurality of physical channels to which to apply power scaling, the transmission power control section 1084 is able to select preferentially a physical channel set including a physical channel with no control signal as a power scaling target.

When the modified example 1 is applied, the transmission power control section 1084 applies power scaling based on the predetermined priority per physical channel. For example, the transmission power control section 1084 is able to perform power scaling based on the priority per physical channel using the power scaling target table illustrated in Fig. 7. Further, when there are a plurality of physical channel sets to which to apply power scaling, the transmission power control section 1084 is able to select a power scaling target by prioritizing a physical channel set including a physical channel with no control signal.

When the modified example 2 is applied, the transmission control section 1084 performs power scaling by prioritizing a physical channel corresponding to Scell rather than a physical channel corresponding to Pcell. When the modified example 2 is used in combination of the modified example 1, the transmission power control section 1084 selects a power scaling target not only based on the predetermined priority per physical channel, but also based on a determined CC (cell) type (Pcell or Scell) to which TAG is assigned.

When the modified example 2 is applied, the transmission power control section 1084 performs power scaling only on a specific physical channel that is transmitted in a specific signal overlapping period, among physical channels transmitted in various signal overlapping periods. For example, the transmission power control section 1084 is able to perform power scaling restrictedly on a PUSCH transmitted in the PO period. Further, when a modified example 4 is applied, the transmission power control section 1084 performs power scaling on signal overlapping periods in the chronological order, irrespective of the types of the signal overlapping periods. In this case, for example, it is possible to perform power scaling based on the predetermined priority per physical channel.

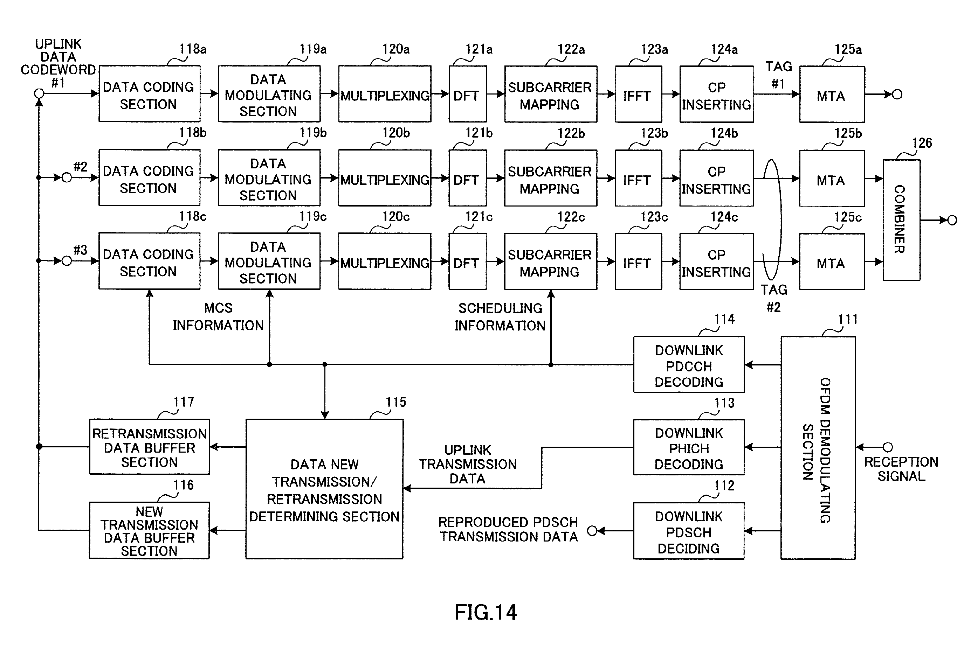

With reference to Fig. 14, description is made about the configuration of the layer 1 processing section 1081 in the baseband signal processing section 108 of the mobile station apparatus 10. As illustrated in Fig. 14, reception signals output from the transmission/reception sections 106a and 106b are demodulated in an OFDM demodulating section 111. In the downlink reception signals demodulated in the OFDM demodulating section 111, PDSCH signals are input to a downlink PDSCH decoding section 112, PHICH signals are input to a downlink PHICH decoding section 113, and PDCCH signals are input to a downlink PDCCH decoding section 114. The downlink PDSCH decoding section 112 decodes the PDSCH signals to reproduce PDSCH transmission data. The downlink PHICH decoding section 113 decodes the downlink PHICH signals. The downlink PDCCH decoding section 114 decodes the PDCCH signals. The PDCCH signals each contain a DCI format including UL grant.

When a PHICH signal decoded by the downlink PHICH decoding section 113 includes a Hybrid ARQ acknowledgement response (ACK/NACK), a data new transmission/retransmission determining section 115 determines whether to perform new data transmission or retransmission based on the Hybrid ARQ acknowledgement response (ACK/NACK). When UL grant of a PDCCH signal includes a Hybrid ARQ acknowledgement response (ACK/NACK), the data new transmission/retransmission determining section 115 determines whether to perform new data transmission or retransmission based on the Hybrid ARQ acknowledgement response (ACK/NACK). These determination results are sent to a new transmission data buffer section 116 and a retransmission data buffer section 117.

The new transmission data buffer section 116 buffers uplink transmission data input from the application section 110. The retransmission data buffer section 117 buffers transmission data output from the new transmission data buffer section 116. When the data new transmission/retransmission determining section 115 gives a determination result indicating new data transmission, uplink transmission data is generated from transmission data in the new transmission data buffer section 116. When the data new transmission/retransmission determining section 115 gives a determination result indicating data retransmission, uplink transmission data is generated from transmission data in the retransmission data buffer section 117.

The generated uplink transmission data is input to a series-parallel converting section (not shown). In this series-parallel converting section, uplink transmission data is subjected to series-parallel conversion to codewords in accordance with the uplink rank number (rank indicator). Here, the codeword represents a coding unit for channel coding and its number (number of codewords) is determined uniquely based on the rank number and/or the number of transmission antennas. In the cased illustrated here, three codewords are determined. The number of codewords and the number of layers (rank indicator) are not necessarily equal to each other. The uplink codeword #1 transmission data, the uplink codeword #2 transmission data and the uplink codeword #3 transmission data are input to data coding sections 118a, 118b and 118c, respectively.

The data coding section 118a codes the uplink codeword #1 transmission data. The uplink codeword #1 transmission data coded in the data coding section 118a is modulated in a data modulating section 119a, multiplexed in a multiplexing section 120a, then subjected to discrete Fourier conversion in a discrete Fourier transform (DFT) section 121 a and converted from time-series information into frequency domain information. The data coding section 118a and the data modulating section 119a performs coding and modulation of the uplink codeword #1 transmission data based on MCS information from the downlink PDCCH decoding section 114. A subcarrier mapping section 122a performs mapping in the frequency domain based on scheduling information (resource allocation information) from the downlink PDCCH decoding section 114. The same processing as the uplink codeword #1 is performed on the uplink codewords #2 and #3 in the data coding sections 118b and 118c through subcarrier mapping sections 122b and 122c. Then, the mapped uplink codeword #1 transmission data subjected to inverse fast Fourier transform in an inverse fast Fourier transform (IFFT) section 123a (123b, 123c) and converted from the frequency domain signal to a time domain signal. Then, a cyclic prefix inserting section 124a (124b, 124c) inserts a cyclic prefix to the transmission signal. The cyclic prefix serves as a guard interval to absorb multipath propagation delay and a reception timing difference between plural users in the base station apparatus 20.

Here, it is assumed that CC #1 is assigned to cell C1, CC #2 and CC #3 are assigned to cell C2, CC #1 is classed as TAG #1 and CC #2 and CC #3 are classed as TAG #2. Then, MTA is applied to the mobile station apparatus 10 that is connected to cell C1 and cell C2, TAG #1 is configured at the transmission timing T1 and TAG #3 is configured at the transmission timing T2. In the present embodiment, uplink data (codeword #1) is transmitted on the uplink in the cell C1 and uplink data (codewords #2 and #3) are transmitted on the uplink in the cell C2.

In the above-mentioned scenarios, the transmission timing of a transmission signal (codeword #1) as uplink data in cell C1 is controlled to be T1 in an MTA processing section 125a. The transmission timing of a transmission signal (codeword #2) as uplink data in cell C2 is controlled to be T2 in an MTA processing section 125b, and the transmission timing of a transmission signal (codeword #3) as uplink data in cell C2 is controlled to be T2 in an MTA processing section 125c. The transmission signal (codeword #2) and the transmission signal (codeword #3) as uplink data in cell C2 are both controlled at the timing T2 and then combined in a combiner 126.

Thus, according to the mobile station apparatus 10 in the present embodiment, when transmitting uplink physical channels at transmission timings controlled per TAG, power scaling is performed by prioritizing physical channels in the FO period where the physical channels of the same subframe number overlap each other across component carriers (CCs). With this structure, it is possible to perform power scaling of physical channels in the FO period in preference to physical channels in the PO period or SO period, thereby making it possible to minimizing deterioration of uplink transmission quality that occurs when power scaling is performed by prioritizing physical channels in the PO period or the like. As a result of this, it is possible to apply power scaling in a signal overlapping period in which uplink transmission power exceeds an upper limit, while preventing deterioration of uplink transmission quality.

Up to this point, the present invention has been described in detail by way of the above-described embodiments. However, a person of ordinary skill in the art would understand that the present invention is not limited to the embodiments described in this description. The present invention could be embodied in various modified or altered forms without departing from the gist or scope of the present invention defined by the claims. Therefore, the statement in this description has been made for the illustrative purpose only and not to impose any restriction to the present invention.

The disclosure of Japanese Patent Application No. 2012-242406 filed on November 2, 2012, including the specification, drawings, and abstract, is incorporated herein by reference in its entirety.

## Claims

1. A user terminal that is capable of communicating with a plurality of radio base stations via a plurality of component carriers in a radio communication system using a system band configurable with the plurality of component carriers, the user terminal comprising:
a transmitting section that transmits an uplink physical channel at an uplink transmission timing, the plurality of component carriers being grouped into a plurality of timing groups, and the transmission timing being controlled per timing group; and
a power control section that, when the uplink transmission timing is controlled per timing group, performs power scaling preferentially on physical channels in a full overlapping period in which the physical channels are of same subframe number and overlap each other across component carriers.

2. The user terminal according to claim 1, wherein the power control section performs power scaling preferentially on the physical channels in the full overlapping period, rather than physical channels in a partial overlapping period in which the physical channels are of different subframe numbers and partially overlap each other across component carriers.

3. The user terminal according to claim 1, wherein the power control section perform power scaling in such a manner that transmission power defined per component carrier does not exceed an upper limit and total transmission power of all the component carriers does not exceed an upper limit.

4. The user terminal according to claim 1, wherein, when the component carriers comprise three or more component carriers, the power control section selects, at random, two component carriers to which to apply power scaling.

5. The user terminal according to claim 1, wherein, when the component carriers comprise three or more component carriers, the power control section selects component carriers to which to apply power scaling, cyclically and repeatedly.

6. The user terminal according to claim 1, wherein, when a physical channel set to which to apply power scaling comprises two different-type physical channels, the power control section reduces transmission power of one of the two different-type physical channels preferentially in an order of SRS (Sounding Reference Signal), PUSCH (Physical Uplink Shared Channel), PUCCH (Physical Uplink Control Channel) and PRACH (Physical Random Access Channel).

7. The user terminal according to claim 1, wherein, when there are a plurality of physical channel sets to which to apply power scaling, the power control section apply power scaling preferentially on a physical channel set including a physical channel with no control signal.

8. A radio communication system using a system band configurable of a plurality of component carriers, the radio communication system comprising:
a plurality of base station apparatuses that each form a cell; and
a user terminal that is capable of communicating with one or more of the base station apparatuses via a plurality of component carriers,
the base station apparatuses each comprising:
a control section that controls an uplink transmission timing per timing group, one or more component carriers being grouped into timing groups; and
a receiving section that receives an uplink physical channel from the user terminal, and
the user terminal comprising:
a transmitting section that transmits the uplink physical channel at the uplink transmission timing controlled per timing group; and
a power control section that, when the uplink transmission timing is controlled per timing group, performs power scaling preferentially on physical channels in a full overlapping period in which the physical channels are of same subframe number and overlap each other across component carriers.

9. A radio communication method in a radio communication system in which a plurality of cells are formed, the radio communication system having a plurality of base station apparatuses that form the cells respectively; and a user terminal that is capable of communicating with one or more of the base station apparatuses via a plurality of component carriers, the radio communication method comprising the steps of:
transmitting, by the user terminal, an uplink physical channel at an uplink transmission timing controlled per timing group; and
when the uplink transmission timing is controlled per timing group, performing, by the user terminal, power scaling preferentially on physical channels in a full overlapping period in which the physical channels are of same subframe number and overlap each other across component carriers.
